# EUROPÄISCHE PATENTSCHRIFT

(11) **EP 3 566 276 B1**
(45) Veröffentlichungstag und Bekanntmachung des Hinweises auf die Patenterteilung: **07.09.2022**
(21) Anmeldenummer: 17781091.8
(22) Anmeldetag: 06.10.2017
(51) Int. Cl.: H02J 3/26, H02J 3/14, B60L 53/14, B60L 53/63

(54) **VERFAHREN ZUM BETREIBEN EINES TEILNEHMERS AN EINEM VERSORGUNGSNETZ**
METHOD FOR OPERATING A NODE ON A SUPPLY GRID
PROCÉDÉ POUR FAIRE FONCTIONNER UN ABONNÉ D'UN RÉSEAU D'ALIMENTATION

(30) Priorität: 05.01.2017 DE 102017100138
(43) Veröffentlichungstag der Anmeldung: 13.11.2019
(73) Patentinhaber: envia Mitteldeutsche Energie AG, 09114 Chemnitz (DE)
(72) Erfinder: KALIS, Oliver, 09127 Chemnitz (DE); NOSKE, Tino, Chemnitz Chemnitz (DE); HAASE, Dr. Sven, 09430 Drebach (DE)
(74) Vertreter: Cohausz & Florack
(86) Internationale Anmeldenummer: PCT/EP2017/075528
(87) Internationale Veröffentlichungsnummer: WO 2018/127307

(56) Entgegenhaltungen:
- WO-A2-2012/128626
- US-A1- 2009 189 456
- US-A1- 2014 021 917
- US-A1- 2015 349 529

## Beschreibung

Der Gegenstand betrifft ein Verfahren sowie eine Vorrichtung zum Betreiben eines an zumindest einer Phase eines elektrischen Versorgungsnetzes betreibbaren Teilnehmers.

Zumindest an einer Phase betreibbare Teilnehmer können im Sinne des Gegenstands beispielsweise elektrisch betriebene Fahrzeuge sein, beispielsweise rein batteriebetriebene Fahrzeuge (BEV) sowie sogenannte Plug-in-Hybridfahrzeuge (PHEV). Beide Typen verfügen über Ladetechnik zum Laden der in den Fahrzeugen verbauten Batterien. Teilnehmer im Sinne des Gegenstands können jedoch auch sogenannte Einspeiser zählen, die entweder auch elektrisch betriebene Fahrzeuge sind oder beispielsweise auch Photovoltaikanlagen, Kraftwärmekopplungsanlagen, Windkraftanlagen, Biomasseanlagen oder dergleichen sein können. Gemein ist diesen Teilnehmern, dass sie auch an weniger als allen Phasen des elektrischen Versorgungsnetzes, vorzugsweise an maximal drei Phasen betrieben werden können.

Heutzutage werden solche Systeme bereits an mehrphasigen Versorgungsnetzen betrieben, wobei zur Sicherstellung der Versorgungssicherheit des jeweiligen Teilnehmers Umschaltvorrichtungen vorgesehen sind, um auf diese eine geeignete Phase des Versorgungsnetzes aufzuschalten bzw. umzuschalten. Bei bekannten Systemen prüft eine Phasenschaltung die jeweilige versorgungsnetzseitige Phase auf deren Qualität und schaltet bei Unterschreitung / Überschreitung eines bestimmten Schwellwertes auf eine andere Phase um. Unter einer Qualität einer Phase kann zumindest die Spannungshöhe verstanden werden.

Insbesondere aufgrund der Zunahme von elektrisch betriebenen Fahrzeugen, also Fahrzeugen mit batterieelektrischen Antrieben, ergibt sich die Notwendigkeit, das Aufladen der Vielzahl der Batteriezellen netzseitig zu unterstützen. Durch das vermehrte Aufladen der Batterien der Fahrzeuge und ggf. das Rückspeisen von elektrischer Energie in das Energieversorgungsnetz ergibt sich eine zunehmende Belastung im Bereich der Mittel- und Niederspannung.

Die Netzstabilität ist insbesondere im Niederspannungsverteilernetz auch dadurch gefährdet, dass die Hersteller solcher elektrischen Fahrzeuge keine einheitliche Ladetechnologie verwenden und insbesondere auch das ein- sowie zweiphasige Laden ihrer Fahrzeuge unterstützen. Bei einer ein- oder zweiphasigen Last auf einem dreiphasigen Versorgungsnetzt ergibt sich jedoch die Gefahr einer unsymmetrischen Belastung innerhalb des Versorgungsnetzes. Diese Gefahr steigt mit der Anzahl der zu versorgenden elektrischen Fahrzeuge.

Darüber hinaus muss das Energieversorgungsnetz weiterhin, auch beim Laden einer Mehrzahl von elektrisch betriebenen Fahrzeugen entlang eines Netzabschnittes, insbesondere eines Stranges eines Niederspannungsnetzes, seine Übertragungsfähigkeit während des Ladevorgangs gewährleisten. Durch eine hohe Gleichzeitigkeit einer Mehrzahl von Ladevorgängen gepaart mit damit verbundenen Leistungsentnahmen und möglichen Unsymmetrien ist die Übertragungsfähigkeit des Verteilnetzes gefährdet. Der Verteilnetzbetreiber bzw. der Energieversorger muss für die Qualität der Energieversorgung einstehen und auch solche Herausforderungen bewältigen.

Somit lag dem Gegenstand die Aufgabe zugrunde, die Übertragungsfähigkeit eines Energieversorgungsnetzes selbst bei hoher Gleichzeitigkeit und hohen Leistungsentnahmen durch an dem Versorgungsnetz unsymmetrisch betreibbaren Teilnehmern aufrechtzuerhalten.

Diese Aufgabe wird gegenständlich durch ein Verfahren nach Anspruch 1 sowie eine Vorrichtung nach Anspruch 14 gelöst.

Die Erfinder haben erkannt, dass bestehende technische Lösungen die Phasenumschaltung bzw. Leistungssteuerung seitens des Teilnehmers in den Vordergrund stellen. Gegenständlich wird nun neben einer geeigneten Phasenauswahl eine Leistungssteuerung ermöglicht, welche die Netzbelange berücksichtigt. Mit Hilfe der Leistungssteuerung ist es möglich, eine gegenüber dem Stand der Technik verbesserte Netzsymmetrierung zu erreichen. Außerdem wird durch die Leistungssteuerung die Wahrscheinlichkeit eines Überlastfalls in dem Versorgungsnetz verringert. Darüber hinaus wird durch die gegenständliche Leistungssteuerung die Übertragungsfähigkeit des Versorgungsnetzes optimal genutzt, so dass ein zukünftiger Netzausbau zumindest verzögert, reduziert oder vermieden werden kann.

Die Erfinder haben festgestellt, dass nicht nur eine geeignete Auswahl einer Phase eines Versorgungsnetzes zu den beschriebenen Vorteilen führt, sondern dass zusätzlich zu der Auswahl der Phase eine elektrische Leistungsvorgabe abhängig von zumindest einem Messwert für zumindest einen der teilnehmerseitigen Anschlüsse erfolgt. Eine elektrische Leistungsvorgabe kann dabei so verstanden werden, dass eine maximal durch den Teilnehmer mit dem Versorgungsnetz auszutauschende Leistung, als Bezug im Falle einer Last bzw. Einspeisen im Falle eines Einspeisers, vorgegeben wird.

Bei dem gegenständlichen Verfahren wird vorzugsweise mit einem Smart-Meter oder einem sonstigen geeigneten Messgerät, was insbesondere ein Spannungsniveau an den Phasen des Versorgungsnetzes feststellen kann, ein Messwert erfasst. Das Messgerät ist gegenständlich dazu ausgerüstet, eine elektrische Größe an zumindest zwei, vorzugsweise drei bzw. allen Phasen des Versorgungsnetzes zu erfassen. Dabei kann eine Anschlussvorrichtung vorgesehen sein, die zum Anschluss der versorgungsnetzseitigen Anschlüsse an teilnehmerseitige Anschlüsse ermöglicht. An den versorgungsnetzseitigen Anschlüssen der Anschlussvorrichtung können die verschiedenen Phasen des Versorgungsnetzes elektrisch angeschlossen sein. Vorzugsweise ist das elektrische Versorgungsnetz ein dreiphasiges Netz mit einem Neutralleiter und einem Erdungsleiter. Über die versorgungsnetzseitigen Anschlüsse werden die drei Phasen des Versorgungsnetzes an die Anschlussvorrichtung angeschlossen. Wenn nachfolgend von Phasen die Rede ist, so können damit auch die versorgungsnetzseitigen Anschlüsse und/oder die teilnehmerseitigen Anschlüsse gemeint sein.

Darüber hinaus wird mit Hilfe des gegenständlichen Verfahrens eine Zuordnung zwischen zumindest einem versorgungsnetzseitigen Anschluss und zumindest einem teilnehmerseitigen Anschluss ermöglicht. Diese Zuordnung kann dabei durch ein elektrisches Verschalten des versorgungsnetzseitigen Anschlusses mit einem teilnehmerseitigen Anschluss erfolgen. Gegenständlich erfolgt das Zuordnen abhängig von dem Messwert. Durch die Zuordnung wird jeweils ein versorgungsnetzseitiger Anschluss mit einem teilnehmerseitigen Anschluss verbunden. Das Zuordnen kann dergestalt sein, dass einer, zwei oder drei versorgungsnetzseitige Anschlüsse mit einem, zwei oder drei teilnehmerseitigen Anschlüssen verbunden werden.

Die Anzahl der teilnehmerseitig betriebenen Anschlüsse kann durch die Anschlussvorrichtung ermittelt werden. Hierzu kann die Anschlussvorrichtung vorzugsweise eine Anschlussimpedanz an den teilnehmerseitigen Anschlüssen messen und feststellen, ob der teilnehmerseitige Anschluss belegt ist oder nicht. Auch kann der Anschlussvorrichtung auf andere Weise signalisiert werden, wie viele und welche teilnehmerseitigen Anschlüsse betrieben werden, so dass eine entsprechende Zuordnung von einer entsprechenden Anzahl an versorgungsnetzseitigen Anschlüssen erfolgen kann.

Die gegenständliche Leistungsvorgabe für zumindest einen der teilnehmerseitigen Anschlüsse für eine Zuordnung erfolgt abhängig von zumindest dem Messwert. Mit Hilfe des Messwertes kann die Qualität des Netzes pro Phase bestimmt werden und eine davon abhängige Leistungsvorgabe erfolgen.

Durch das Messen der Messwerte versorgungsnetzseitig und ggf. den Vergleich mit Erwartungswerten am Anschlusspunkt ist es möglich, eine Netzvorbelastung zu bestimmen. Zunächst kann in Abhängigkeit der gemessenen Werte eine Phase bestimmt werden, welche mit dem teilnehmerseitigen Anschluss verbunden wird. Insbesondere bei ein- und zweiphasig betriebenen Teilnehmern ist eine Auswahl der entsprechenden versorgungsnetzseitigen Phasen sinnvoll, um hierüber eine entsprechende Symmetrierung des Versorgungsnetzes bzw. der drei Phasen des Versorgungsnetzes zu ermöglichen.

Wenn nachfolgend von dem Betreiben der Teilnehmer an den teilnehmerseitigen Anschlüssen die Rede ist, so kann dies selbstverständlich sowohl ein als elektrische Last auftretender Teilnehmer sein, als auch ein als elektrischer Einspeiser auftretender Teilnehmer sein. Im Grunde kann auch mit einem Einspeiser eine entsprechende Phasenauswahl erfolgen, wobei dann jedoch die Auswahl zum Zuordnen abhängig vom Messwert unterschiedlich sein kann, als dies bei elektrischen Lasten ist. Dies wird nachfolgend noch näher erläutert werden. Soweit möglich, ist die vorhergehende als auch nachfolgende Beschreibung so zu verstehen, dass der Teilnehmer elektrische Leistung aus dem Versorgungsnetz beziehen kann und/oder elektrische Leistung in das Versorgungsnetz einspeisen kann. Insbesondere ist der Gegenstand anwendbar auf elektrische Teilnehmer, die lediglich ein- oder zweiphasig betrieben werden, wobei die Anschlussvorrichtung auch zum Betreiben von dreiphasig betriebenen elektrischen Teilnehmern eingerichtet sein kann.

Gemäß einem Ausführungsbeispiel wird vorgeschlagen, dass der Messwert zumindest vor der Zuordnung gemessen wird. Die Leistungsvorgabe erfolgt vorzugsweise vor der Zuordnung erfolgen. Hierbei ist es sinnvoll, sowohl das Messintervall, als auch das Leistungsintervall zu definieren, wobei beispielsweise ein solches Intervall eine Minute, fünf Minuten, zehn Minuten oder fünfzehn Minuten betragen kann. Vorzugsweise erfolgt jedoch solange keine Phasenumschaltung nach einer Zuordnung, bis eine Leistungsvorgabe für eine zugeordnete Phase zu Null, insbesondere für eine bestimmte Zeit zu Null wird.

Gemäß einem Ausführungsbeispiel wird vorgeschlagen, dass der zumindest eine versorgungsnetzseitige Anschluss zu zumindest einem teilnehmerseitigen Anschluss abhängig von einer Abweichung des Messwertes zu einem Bezugswert (Erwartungswert) zugeordnet wird. Eine Zuordnung kann derart erfolgen, dass der versorgungsnetzseitige Anschluss ausgewählt wird, dessen Messwert am nächsten an diesem Bezugswert liegt. Auch ist es möglich, dass die Zuordnung abhängig von dem Betrag des Messwertes erfolgt.

Im Falle einer elektrischen Last ist es sinnvoll, zunächst diejenigen versorgungsnetzseitigen Anschlüsse mit den teilnehmerseitigen Anschlüssen zu verbinden, an denen die Netzbelastung am geringsten ist, insbesondere an denen die jeweils höchste Spannung anliegt. Es wird auch vorgeschlagen, dass nach und nach jeweils der versorgungsnetzseitige Anschluss mit einem teilnehmerseitigen Anschluss verbunden wird, dessen Messwert jeweils der größte oder kleinste der noch vorhandenen Messwerte ist. Somit kann innerhalb eines Stromkreises eines Verteilernetzes sukzessive abhängig vom größten/kleineren Messwert zum kleinsten/größten Messwert hin eine Zuordnung der versorgungsnetzseitigen Anschlüsse zu den teilnehmerseitigen Anschlüssen erfolgen.

Die Messung der versorgungsnetzseitigen Messwerte erfolgt frei von den Teilnehmern. Dies kann beispielsweise dadurch erfolgen, dass während der Messung die Verbindung zwischen dem teilnehmerseitigen Anschluss und dem versorgungsnetzseitigen Anschluss unterbrochen wird. Somit wird netzseitig die Netzqualität pro Phase unabhängig von dem Teilnehmer gemessen.

Der Messwert ist eine elektrische Netzimpedanz am versorgungsnetzseitigen Anschluss ist. Mit Hilfe der Erfassung der versorgungsnetzseitigen Netzimpedanz kann der elektrische Anschlusspunkt im Verteilernetz bestimmt werden. Das Zuordnen einer elektrischen Leistungsvorgabe abhängig von zumindest dem Messwert kann dabei vorzugsweise von mehr als einer elektrischen Größe, insbesondere sowohl von Spannung als auch von Netzimpedanz abhängig sein.

Es wird vorgeschlagen, dass das gegenständliche Verfahren, insbesondere die Zuordnung der versorgungsnetzseitigen Anschlüsse zu den teilnehmerseitigen Anschlüssen, in Reaktion auf eine Verbindung eines Elektrofahrzeugs mit der Anschlussvorrichtung erfolgt. Hierbei kann insbesondere eine Ladeanforderung des Elektrofahrzeugs an der Anschlussvorrichtung detektiert werden. Insbesondere kann festgestellt werden, mit wie vielen Phasen sich das Elektrofahrzeug mit dem Versorgungsnetz verbinden lässt und es können die teilnehmerseitigen Anschlüsse bestimmt werden, die mit dem Elektrofahrzeug verbunden werden können.

Beim Zuordnen der versorgungsnetzseitigen Anschlüsse mit den teilnehmerseitigen Anschlüssen kann gemäß einem Ausführungsbeispiel eine Schaltmatrix eingesetzt werden. Die Schaltmatrix ist derart aufgebaut, dass sie zwischen einem ersten teilnehmerseitigen Anschluss und den zumindest drei versorgungsnetzseitigen Anschlüssen jeweils einen ersten Schalter aufweist. Somit ist es möglich, auf den ersten teilnehmerseitigen Anschluss über einen der ersten Schalter wahlfrei einen der versorgungsnetzseitigen Anschlüsse aufzuschalten. Darüber hinaus kann zwischen einem zweiten teilnehmerseitigen Anschluss und zwei der versorgungsnetzseitigen Anschlüsse jeweils ein zweiter Schalter vorgesehen sein. Somit können auf einen zweiten teilnehmerseitigen Anschluss wahlfrei zwei der drei versorgungsnetzseitigen Anschlüsse aufgeschaltet werden. Schließlich kann zwischen einem dritten teilnehmerseitigen Anschluss und einem einzigen der versorgungsnetzseitigen Anschlüsse ein dritter Schalter vorgesehen sein. Somit kann auf den dritten teilnehmerseitigen Anschluss nur einer der versorgungsnetzseitigen Anschlüsse aufgeschaltet werden. Mit Hilfe dieser Konfiguration lässt sich eine Verbindung zwischen versorgungsnetzseitigen Anschlüssen und teilnehmerseitigen Anschlüssen mit einer Mindestzahl an Schaltern realisieren.

Vorzugsweise sind drei teilnehmerseitige Anschlüsse und drei versorgungsnetzseitige Anschlüsse vorgesehen. Der erste teilnehmerseitige Anschluss kann über drei erste Schalter mit einem beliebigen der versorgungsnetzseitigen Anschlüsse verbunden werden. Der zweite teilnehmerseitige Anschluss kann über nur zwei zweite Schalter mit zweien der versorgungsnetzseitigen Anschlüsse verbunden werden und der dritte teilnehmerseitige Anschluss kann über nur einen dritten Schalter mit einem einzigen versorgungsnetzseitigen Anschluss verbunden werden.

Gemäß einem Ausführungsbeispiel wird zur Vermeidung von Kurzschlüssen vorgeschlagen, dass die ersten, zweiten und dritten Schalter gegenseitig derart verknüpft sind, dass ein teilnehmerseitiger Anschluss jeweils nur mit einem der versorgungsnetzseitigen Anschlüsse verbindbar ist. Zur Vermeidung von Kurzschlüssen wird auch vorgeschlagen, dass von den ersten und zweiten Schaltern jeweils nur einer geschlossen wird.

Darüber hinaus können der erste und der zweite Schalter mit einem Neutralleiterschalter verknüpft sein, so dass bei einem Schließen eines ersten und/oder eines zweiten Schalters der Neutralleiterschalter geschlossen wird.

Durch die Schaltmatrix ist es möglich, bei einem einphasigen Teilnehmer durch die ersten Schalter eine Phase des Versorgungsnetzes mit dem Teilnehmer zu verbinden. Bei einem zweiphasigen Teilnehmer wird durch einen ersten und einen zweiten Schalter eine Verbindung mit zwei Phasen des Versorgungsnetzes hergestellt und bei einem dreiphasigen Teilnehmer wird durch Schließen eines ersten, eines zweiten und des dritten Schalters jede Phase des Versorgungsnetzes mit den Phasen des Teilnehmers verbunden.

Gemäß einem Ausführungsbeispiel wird vorgeschlagen, dass bei einer einphasigen Zuordnung die zweiten und dritten Schalter geöffnet bleiben und bei einer zweiphasigen Zuordnung der dritte Schalter geöffnet bleibt. Hierdurch wird durch minimalen Schaltaufwand eine bestmögliche Flexibilität der Schaltmatrix erreicht. Wie bereits erläutert, kann der Bezugswert verwendet werden, die Zuordnung abhängig von dem Messwert zu bestimmen. Darüber hinaus kann der Bezugswert auch dafür verwendet werden, die Leistungsvorgabe zu bestimmen. Der Bezugswert kann insbesondere für jede Phase bestimmt werden. Der Bezugswert kann dabei beispielsweise eine Nennspannung und/oder eine Nennimpedanz sein. Dies kann ein fest vorgegebener Wert sein. Auch ist es möglich, dass der Bezugswert für jede Phase individuell bestimmt wird. Dies kann beispielsweise abhängig von historischen Messwerten an der Phase erfolgen. So ist es beispielsweise möglich, dass ein mittlerer Spannungswert pro Phase bestimmt wird und dieser mittlere Spannungswert im Vergleich zum aktuellen Spannungswert als Bezugswert verwendet wird. Dadurch wird der Bezugswert relativ zu der aktuellen Netzauslastung der jeweiligen Phase bestimmt, wobei für jede Phase individuell ein optimaler Bezugswert dynamisch bestimmt werden kann. Dies ermöglicht es, auf die Netzqualität jeder Phase individuell reagieren zu können und insbesondere die Leistungsvorgabe für jede Phase individuell einstellen zu können. Auch ist es möglich, dass der Bezugswert als Mittelwert über die elektrischen Größen aller drei Phasen bestimmt wird und für jede der drei Phasen den gleichen Wert hat. Durch den Vergleich des Momentanwertes der Spannung mit historischen Messwerten kann indirekt auf die aktuelle Auslastung des Niederspannungsverteilnetzes geschlossen werden.

Die Leistungsvorgabe kann durch eine Kennlinie definiert sein. Hierbei kann der Arbeitspunkt der Kennlinie für die Zuordnung der Leistungsvorgabe abhängig von dem Messwert bestimmt werden. Die Leistungsvorgabe ist vorzugsweise eine P(U)-Kennlinie, kann jedoch auch eine P(Z)-Kennlinie (Z: Netzimpedanz) oder eine P(U, Z)-Kennlinie sein. Durch die Bestimmung des Arbeitspunktes auf der Kennlinie abhängig von dem aktuellen Messwert ist es möglich, dass die Leistungsvorgabe, also die aus dem Netz entnommene Leistung bei einer Last oder die in das Netz eingespeiste Leistung bei einem Einspeiser, von dem aktuellen Niveau der elektrischen Größe des vorgelagerten Netzes, insbesondere von dem Spannungsniveau und/oder von einem Auslastungsniveau angepasst wird. Insbesondere ist die Kennlinie eine P(U)-Kennlinie und zunächst wird der Arbeitspunkt abhängig von der elektrischen Spannung bestimmt.

Anschließend kann die Kennlinie bzw. der Arbeitspunkt der Kennlinie durch eine aktuell gemessene Netzimpedanz korrigiert werden. Durch das Messen der Netzimpedanz kann beispielsweise zwischen einem von Mittelspannungs-/Niederspannungstransformator entfernten bzw. nahem Anschlusspunkt differenziert werden.

Neben der Korrektur abhängig von der Netzimpedanz kann der aktuell bestimmte Arbeitspunkt abhängig von der aktuellen Messung auch durch eine Abweichung des gemessenen Wertes von einem Mittelwert der elektrischen Größe korrigiert werden. Beispielsweise kann eine Abweichung der gemessenen elektrischen Spannung von einem Spannungsmittelwert, der beispielsweise über die Zeit ermittelt wurde, bestimmt werden. Die entsprechende Abweichung kann zur Korrektur der Kennlinie bzw. des Arbeitspunktes verwendet werden. Die Abweichung vom Mittelwert kann dabei ein Maß für die aktuelle Auslastung des Netzes (Auslastungsniveau) sein.

Neben der Korrektur der Kennlinie bzw. des Arbeitspunktes abhängig von der Netzimpedanz sowie von der Netzlast kann zusätzlich, beispielsweise von einem Versorgungsnetzbetreiber, ein Steuersignal verwendet werden, um die Kennlinie zu skalieren. So kann beispielsweise die Leistungsvorgabe um einen Faktor zwischen 0 und 1 abhängig von dem Steuersignal reduziert werden.

Gemäß einem Ausführungsbeispiel hat die Kennlinie ein konstantes Maximum. Darüber hinaus kann die Kennlinie ausgehend von dem Maximum einen zu einem Nullpunkt verlaufenden Absenkungsbereich aufweisen. Ein Maximum kann eine maximale Leistungsvorgabe (z.B. P=3,7 kW) sein und der Nullpunkt kann eine Leistungsvorgabe mit einer Leistung P=0 kW sein. Der Absenkungsbereich ist dabei vorzugsweise rampenförmig.

Vorzugsweise kann für eine Last eine andere Kennlinie verwendet werden, als für einen elektrischen Einspeiser. Die Leistungsvorgaben können für die Last und den elektrischen Einspeiser unterschiedliche Vorzeichen haben.

Um die Regelung der Leistung zu vereinfachen, wird vorgeschlagen, dass die Kennlinie im Absenkungsbereich stufenförmig verläuft, wobei die Stufen vorzugsweise gleiche Schrittweiten und/oder gleiche Stufenhöhen aufweisen. Eine Stufenhöhe kann dabei vorzugsweise zwischen 5 und 15 % des Maximums, insbesondere 10 % des Maximums betragen. Dabei kann das Maximum insbesondere von einer unskalierten Kennlinie verwendet werden, welche noch nicht durch das externe Steuersignal skaliert wurde.

Im Falle einer Last ist die Kennlinie derart, dass mit sinkender Spannung die durch den Teilnehmer bezogene Leistung abgesenkt werden sollte. Insbesondere kann bei einer Spannung, die z.B. in Abhängigkeit vom Anschlusspunkt und Auslastung des Verteilernetzes zwischen 90 und 98 % des Bezugswertes liegt, der Absenkungsbereich beginnen, insbesondere beginnt der Absenkungsbereich bei 94 % des Bezugswertes. Der Absenkungsbereich bzw. die Rampe kann dann über einen Bereich von 5 %-Punkten bis 10 %-Punkten abgesenkt werden und insbesondere kann der Absenkungsbereich einen Nullpunkt bei 85 bis 89 %, vorzugsweise 89 % des Bezugswertes liegen.

Im Falle eines Einspeisers kann der Absenkungsbereich vorzugsweise zwischen 102 und 110 % des Bezugswertes beginnen, insbesondere bei 110 % des Bezugswertes. Die Absenkung kann dann in einem Bereich von 1 bis 5 %-Punkten vom Bezugswert durchgeführt werden. Insbesondere kann der Nullpunkt bei 104 bis 112 %, insbesondere 108 % des Bezugswertes liegen.

Gemäß einem Ausführungsbeispiel wird vorgeschlagen, dass für den Fall, dass der Arbeitspunkt den Nullpunkt erreicht hat, eine neue Zuordnung durchgeführt wird. Insbesondere wird nach einer initialen Zuordnung zunächst keine Änderung einer Zuordnung vorgenommen. Eine erneute Zuordnung erfolgt vorzugsweise bis zu maximal zwei Mal je Zeitintervall (12-24 Stunden). Eine erneute Zuordnung erfolgt vorzugsweise erst dann, wenn die Kennlinie einen Nullpunkt erreicht hat. Eine erneute Zuordnung erfolgt vorzugsweise als Leistungsvorgabe auf einer anderen Phase auf der P >0 ermittelt wurde. Eine erneute Zuordnung erfolgt vorzugsweise in jedem Fall für einen neuen Ladevorgang. Die Kennlinie kann einen Nullpunkt erreichen, wenn entweder der Arbeitspunkt im Nullpunkt angelangt ist oder aufgrund eines externen Steuersignals (auch EVU-Vorgabe genannt) die Kennlinie auf 0 skaliert wurde. In diesem Fall kann eine erneute Zuordnung notwendig werden. Um zu verhindern, dass alle Teilnehmer, die an einer gegenständlichen Anschlussvorrichtung angeschlossen sind, gleichzeitig an das Versorgungsnetz angeschlossen werden, erfolgt eine neue Zuordnung erst nach einer gewissen Wartezeit. Diese Wartezeit ist vorzugsweise in einem Zeitintervall zufällig gewählt.

Bei Netzausfall oder bei einem Stellsignal (EVU Vorgabe), das die Leistungsvorgabe zu 0 setzt, ist anschließend, wenn das Netz wieder aktiv ist oder die Leistungsvorgabe größer 0 gesetzt wird, ein Anpassen der Leistung der Teilnehmer nach P(U) notwendig. Daher wird vorgeschlagen, dass bei einer Wiederaufnahme eines Leistungsflusses zwischen dem Teilnehmer und dem Versorgungsnetz zunächst eine schrittweise Leistungssteigerung entlang der Kennlinie erfolgt. Diese schrittweise Leistungssteigerung kann vorzugsweise in gleichen Schritten, beispielsweise in 10%-Schritten von der unskalierten Maximalleistung erfolgen.

Ein weiterer Aspekt ist eine elektrische Anschlussvorrichtung nach Anspruch 20.

Nachfolgend wird der Gegenstand anhand einer Ausführungsbeispiele zeigenden Zeichnung näher erläutert. In der Zeichnung zeigen:
- Fig. 1: ein Ausführungsbeispiel einer Anschlussvorrichtung;
- Fig. 2a: eine Logiktabelle für die Zuordnung der Phasen bei einem einphasigen Teilnehmer;
- Fig. 2b: eine Logiktabelle für eine Phasenzuordnung bei einem zweiphasigen Teilnehmer;
- Fig. 3a: eine P(U)-Kennlinie für eine Last;
- Fig. 3b: eine P(U)-Kennlinie für einen Einspeiser;
- Fig. 4: ein Ablaufdiagramm für ein Verfahren gemäß einem Ausführungsbeispiel.

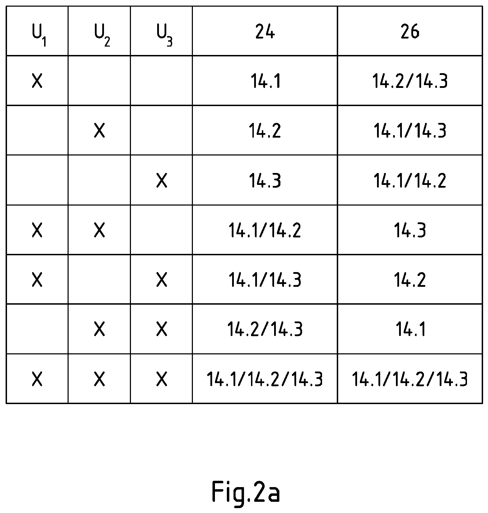

In den Figuren 2a, 2b, 3a, 3b, 4 erfolgt eine Zuordnung abhängig von einer gemessenen Spannung. Beansprucht ist eine Zuordnung abhängig von einer Netzimpedanz.

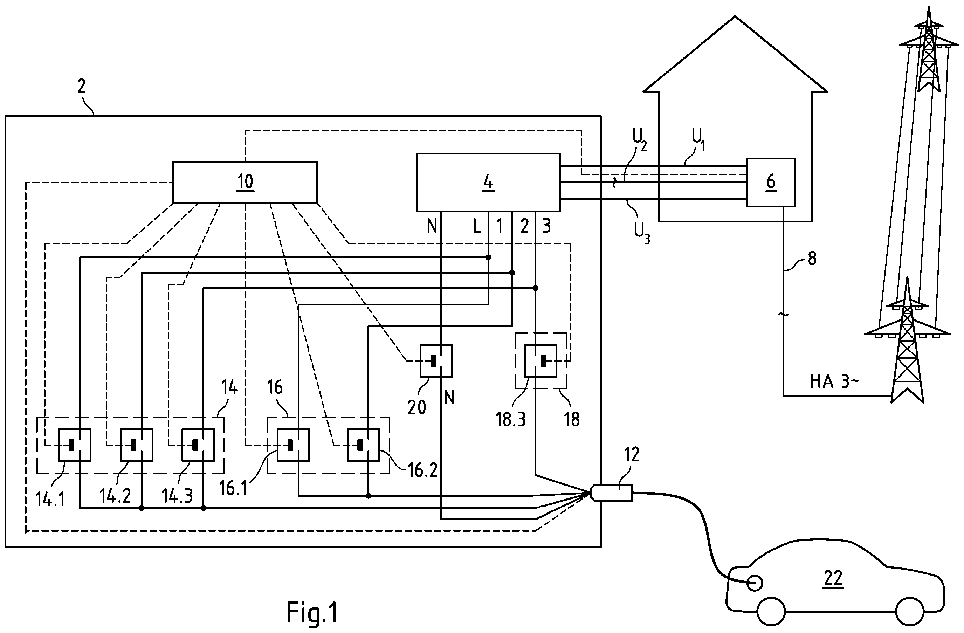

Fig. 1 zeigt eine Anschlussvorrichtung 2 gemäß einem Ausführungsbeispiel. Eine Anschlussvorrichtung 2 kann beispielsweise eine Ladestation (Ladebox, Wallbox, etc.) für ein Elektrofahrzeug 22 sein, welches gegenständlich sowohl netzdienlich laden kann, als auch optional netzdienlich rückspeisen kann. Die Anschlussvorrichtung 2 ist versorgungsnetzseitig über einen Leistungsschutzschalter 4 an einen Hausanschlusspunkt 6 angeschlossen. Die Verbindung zwischen dem Leistungsschutzschalter 4 und dem Hausanschlusspunkt 6 ist vorzugsweise dreiphasig mit einem zusätzlichen Nullleiter und einem Erdungsleiter. Somit hat die Anschlussvorrichtung 2 an seinem Schutzschalter 4 drei versorgungsnetzseitige Anschlüsse (Phasen) sowie einen Neutralleiter und einen Erdungsleiter.

An dem Hausanschlusspunkt 6 kann eine Messvorrichtung (nicht gezeigt) vorgesehen sein, über die elektrische Größen eines an dem Hausanschlusspunkt 6 angeschlossenen Versorgungsnetzes 8 gemessen werden können. Die gemessenen elektrischen Größen können beispielsweise eine Spannung einer jeden Phase sowie ein Strom sein über den die Netzimpedanz bestimmt werden kann. Die Messvorrichtung in dem Hausanschlusspunkt 6 kann beispielsweise ein Smart Meter sein und die notwendigen elektrischen Größen erfassen.

In der Anschlussvorrichtung 2 kann ein Steuergerät 10 angeordnet sein. Das Steuergerät 10 kann einerseits für die Zuordnung zwischen den versorgungsnetzseitigen Anschlüssen (Phasen U₁, U₂ und U₃ des Versorgungsnetzes 8) und den teilnehmernetzseitigen Anschlüssen 12 eingerichtet sein. Hierzu kann das Steuergerät 10, wie strichpunktiert dargestellt, von dem in dem Hausanschlusspunkt 6 angeordneten Messgerät die gemessenen Messwerte empfangen und auswerten. Hierbei kann das Steuergerät 10 sowohl aktuelle Messwerte empfangen und auswerten, als auch Messmittelwerte empfangen und/oder selbst ermitteln. Hierbei kann insbesondere ein Spannungsmittelwert ermittelt werden.

Die Anschlussvorrichtung 2 ist vorzugsweise für ein einphasiges Laden bis 3,7 kVA, ein zweiphasiges Laden bis 7,4 kVA und ein dreiphasiges Laden bis 11 kVA eingerichtet.

Für ein gegenständliches Zuordnen der versorgungsnetzseitigen Phasen U₁, U₂, U₃ zu den teilnehmerseitigen Anschlüssen 12 sind erste Schalter 14, zweite Schalter 16 und ein dritter Schalter 18 vorgesehen.

Die ersten Schalter 14 weisen einen mit der ersten Phase U₁ verbundenen Schalter 14.1, einen mit der zweiten Phase U₂ verbundenen Schalter 14.2 und einen mit der dritten Phase U₃ verbundenen Schalter 14.3 auf. Die zweiten Schalter weisen einen mit der ersten Phase U₁ verbundenen Schalter 16.1 und einen mit der zweiten Phase U₂ verbundenen Schalter 16.2 auf. Der dritte Schalter 18.3 ist mit der dritten Phase U₃ verbunden. Die ersten Schalter 14, zweiten Schalter 16 und der dritte Schalter 18 sind mit dem Steuergerät 10 in Wirkverbindung und werden über dieses angesteuert. Darüber hinaus ist ein weiterer Schalter 20, der zum Schalten des Neutralleiters gebildet ist, ebenfalls mit dem Steuergerät 10 verbunden.

Das Steuergerät 10 ist dergestalt, dass es bei einem einphasig betriebenen Teilnehmer an den teilnehmerseitigen Anschlüssen 12 ausschließlich die ersten Schalter 14 ansteuert. Bei einem zweiphasigen betriebenen Teilnehmer an dem teilnehmerseitigen Anschlüssen 12 werden durch das Steuergerät 10 sowohl die ersten Schalter 14 als auch die zweiten Schalter 16 angesteuert und bei einem dreiphasig betriebenen Teilnehmer werden alle drei Schalter 14, 16, 18 geschaltet. Die Schalter 14 sind vorzugsweise so geschaltet, dass jeweils nur einer der Schalter 14.1, 14.2 oder 14.3 geschlossen sein kann. Die Schalter 16 sind so eingerichtet, dass jeweils nur ein Schalter 16.1 oder 16.2 geschlossen sein kann. Ferner ist das Steuergerät 10 so ausgestaltet, dass eine Phase U₁, U₂ oder U₃ jeweils nur durch einen der Schalter 14, 16, 18 auf einen teilnehmerseitigen Anschluss 12 geschaltet werden kann.

Darüber hinaus wird über das Steuergerät 10 sichergestellt, dass wenn zumindest einer der Schalter 14, 16 geschlossen wird, gleichzeitig der Schalter 20 geschlossen wird. Die Ansteuerung des Schalters 20 ist auch für einen dreiphasigen Teilnehmer bei Ansteuerung des Schalters 18 über das Steuergerät sichergestellt.

An den teilnehmerseitigen Anschlüssen 12 kann ein Elektrofahrzeug 22 angeschlossen sein. Das Elektrofahrzeug 22 kann an die teilnehmerseitigen Anschlüsse 12 zum Laden oder zum Rückspeisen angeschlossen sein. Hierbei kann das Elektrofahrzeug 22 z.B. je nach Notwendigkeit des Versorgungsnetzes 8 als Last oder als Einspeiser fungieren.

Wird das Elektrofahrzeug 22 an den teilnehmerseitigen Anschluss 12 angeschlossen, signalisiert es gegenüber der Anschlussvorrichtung seine Ladebereitschaft bzw. seine Anwesenheit. In diesem Moment wird durch das Steuergerät 10 zunächst veranlasst, dass in dem Hausanschlusspunkt 6 durch die dort verbaute Messvorrichtung die notwendigen elektrischen Größen erfasst werden können, um anschließend eine gegenständliche Zuordnung der versorgungsnetzseitigen Phasen U₁, U₂, U₃ mit dem teilnehmerseitigen Anschlüssen 12 zu verbinden, in dem die Schalter 14, 16, 18 und 20 entsprechend der nachfolgenden Beschreibung angesteuert werden. Erfassung der Messgrößen kann optional auch separat in der Ladeanschlussvorrichtung über Spannungs- bzw. Strommesswertumformer erfolgen.

Fig. 2a zeigt, wie bei einem einphasigen Teilnehmer die Schalter 14, 16, 18 geschaltet werden müssen, um eine gegenständliche Zuordnung zu realisieren. In den Spalten U₁, U₂, U₃, zeigt ein "X" an, welche der Phasen U₁, U₂, U₃ die höchste Spannung hat. Die Maximalspannung kann die Bezugsgröße sein. Dies kann beispielsweise 230V sein. Zur Vereinfachung kann es sinnvoll sein, Spannungsbänder beispielsweise mit Spannungsbreiten von 0,5V oder 1V zu definieren und wenn die Spannungen zumindest zweier der Phasen U₁, U₂, U₃ gemeinsam in einem dieser Bänder liegen, werden diese Spannungen als gleich angenommen. Die Spalte 24 repräsentiert die zu schließenden Schalter im Falle einer Last und die Spalte 26 repräsentiert die zu schließenden Schalter im Falle einer Einspeisung.

Wird die höchste Spannung auf der Phase U₁ gemessen, so erfolgt ein Schließen des Schalters 14.1 beim Laden (Spalte 24) und ein zufälliges Schalten der Schalter 14.2 oder 14.3 beim Einspeisen (Spalte 26). Das bedeutet, dass wenn die Phase U₁ die höchste Spannung hat, diese Phase über den Schalter 14.1 auf den teilnehmerseitigen Anschluss 12 geschaltet wird und durch die Last 22 belastet wird, so dass über eine Absenkung der Spannung auf der Phasen U₁ eine Symmetrierung erfolgen kann. Im Falle der Einspeisung wird durch das Schließen der Schalter 14.2 oder 14.3 die Phase U₁ nicht mit weiterer Leistung beaufschlagt, so dass über eine Erhöhung der Spannungen auf den Phasen U₂ oder U₃ eine Symmetrierung erfolgen kann.

Es versteht sich, dass stets auch der Schalter 20 jeweils geschlossen wird.

Die folgenden beiden Zeilen sind selbsterklärend.

Für den Fall, dass auf den Phasen U₁ und U₂ gleich hohe Spannungen bzw. die Spannungen in den gleichen Spannungsbändern gemessen werden und diese höher sind, als auf der Phase U₃, so erfolgt ein zufälliges Schalten der Schalter 14.1 oder 14.2 bei Last (Spalte 24) bzw. ein Schalten des Schalters 14.3 beim Einspeisen (Spalte 26). Hierdurch wird eine Symmetrierung dadurch erreicht, dass mit dem Schalten der Schalter 14.1 oder 14.2 im Falle eines Leistungsbezugs durch eine Last 22 die Spannungen auf den Phasen U₁, U₂ reduziert werden. Im Falle einer Rückspeisung auf der Phase U₃ wird durch das Schließen des Schalters 14.3 die entsprechende Spannung erhöht.

Die weiteren Zeilen sind wiederum selbsterklärend.

Durch das Schalten entsprechend der Logiktabelle gemäß Fig. 2a wird stets erreicht, dass bei einem einphasigen Teilnehmer eine möglichst gute Symmetrierung auf den Phasen U₁, U₂, U₃ erfolgt. Die Symmetrierung wird sowohl für den Leistungsbezug als auch die Leistungsrückspeisung durch das Elektrofahrzeug 22 angestrebt. Es versteht sich, dass die zweiten Schalter 16 und der dritte Schalter 18 für den Fall eines einphasigen Teilnehmers 22 an den teilnehmerseitigen Anschlüssen 12 geöffnet bleiben.

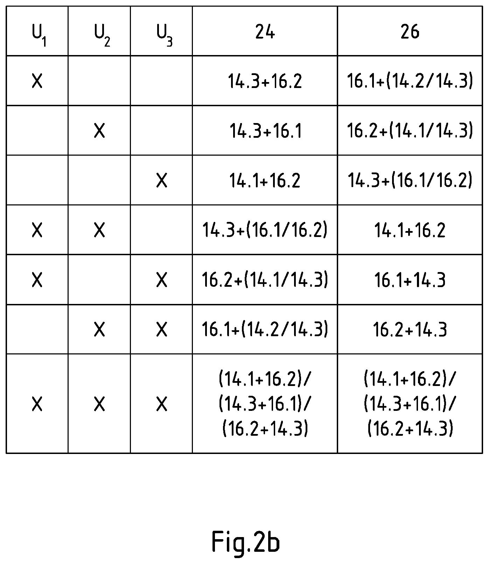

Fig. 2b zeigt, wie bei einem zweiphasigen Teilnehmer die Schalter 14 und 16 geschaltet werden müssen, um eine gegenständliche Zuordnung zu realisieren. In den Spalten U₁, U₂, U₃, zeigt ein "X" an, welche der Phasen U₁, U₂, U₃ die niedrigste Spannung hat. Anders als bei einem einphasigen Teilnehmer wird hier über die Messeinrichtung oder Steuergerät 10 nicht ein Maximalwert einer Spannung bestimmt, sondern ein Minimalwert. Auch hier können wiederum Spannungsbänder definiert sein, innerhalb derer Spannungen als gleich angenommen werden. Ebenfalls wird stets der Schalter 20 mit geschlossen, wenn einer der Schalter 14, 16 oder 18 geschlossen wird.

Für den Fall, dass auf der Phase U₁ die niedrigste Spannung gemessen wird, erfolgt ein Schließen der Schalter 14.3 und 16.2. Dadurch wird durch den ersten Schalter 14.3 die dritte Phase U₃ auf ein teilnehmerseitigen Anschluss 12 gelegt und die zweite Phase U₂ durch den zweiten Schalter 16.2 (Spalte 24). Die Phase U₁ bleibt dann unbelastet. Im Falle der Rückspeisung wird, wie in Spalte 26 dargestellt, der Schalter 16.1 geschlossen und zufällig einer der Schalter 14.2 oder 14.3. Somit wird durch das Schließen des Schalters 16.1 sichergestellt, dass bei der Rückspeisung die Phase U₁ mit dem niedrigsten Spannungsniveau mit Spannung von dem Einspeiser 22 versorgt wird und nur eine der Phasen U₂ und U₃ ebenfalls durch den Teilnehmer 22 versorgt wird.

Fällt eine der Spannungen beispielsweise unter einen Grenzwert, beispielsweise unter einen Wert von 85% des Bezugswertes, so ist ein Bezug gemäß der Spalten 24 nicht mehr möglich und es wird lediglich eine Rückspeisung gemäß der Spalte 26 ermöglicht. Andererseits kann eine Spannung über einen Grenzwert steigen, beispielsweise 110% des Bezugswertes. Dann ist nur ein Bezug entsprechend der Spalte 24 möglich und ein Rückspeisen entsprechend der Spalten 26 ist unterbunden.

In den Diagrammen in Fig. 2a und 2b präsentiert ein "+" ein logisches UND, ein "/" ein logisches ODER.

Über die Logiktabellen der Fig. 2a und 2b erfolgt das Zuordnen der versorgungsnetzseitigen Anschlüsse zu den teilnehmerseitigen Anschlüssen gemäß eines Ausführungsbeispiels.

Im Falle eines dreiphasigen Teilnehmers 22 werden stets alle drei Phasen U₁, U₂, U₃ auf den teilnehmerseitigen Anschluss 12 geschaltet und hierbei die Schalter 14.1, 16.2 und 18.3 sowie zwangsläufig 20 geschlossen.

Neben der Zuordnung erfolgt gegenständlich auch eine elektrische Leistungsvorgabe für den Leistungsfluss zwischen der Anschlussvorrichtung 2 und dem Teilnehmer 22, sei es ein Bezug von elektrischer Leistung oder ein Rückspeisen elektrischer Leistung. Diese Leistungsvorgabe erfolgt zunächst abhängig von einer der Kennlinien 3a, 3b, wie nachfolgend dargestellt.

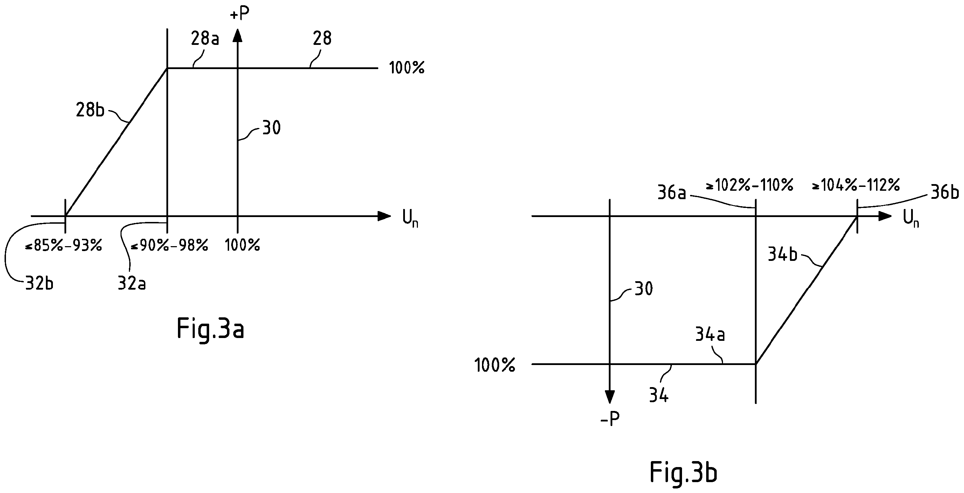

Fig. 3a zeigt eine P(U)-Kennlinie 28 für einen Bezug elektrischer Leistung. Hierbei hat die Kennlinie 28 ein konstantes Maximum 28a und einen Absenkungsbereich 28b. Ferner ist ein Bezugswert 30 angegeben, der beispielsweise eine Nominalspannung sein kann.

Auf der Abzisse ist die Spannung aufgetragen und auf der Ordinate ist die Leistungsvorgabe aufgetragen.

Zunächst erfolgt eine Zuordnung der Phasen zu den teilnehmerseitigen Anschlüssen gemäß den Logiktabellen 2a und 2b oder aber im Falle eines dreiphasigen Teilnehmers 22 durch Schließen jeweils eines der Schalter 14, 16, 18 und des Schalters 20. Hierbei erfolgt das Schließen der Schalter innerhalb eines Schaltintervalls zu einem zufälligen Zeitpunkt.

Zusätzlich zum Bestimmen der Zuordnung wird eine Leistungsvorgabe durchgeführt. Hierzu wird zunächst die Spannung am Hausanschlusspunkt 6 oder auch separat in der Ladeanschlussvorrichtung über Spannungsmesswertumformer für die jeweils zu schaltende Phase bestimmt. Anschließend wird bestimmt, ob diese Spannung oberhalb eines oberen Grenzwertes 32a ist oder nicht. Der obere Grenzwert 32a kann beispielsweise 90% des Bezugswerts 30 betragen. Ist dies der Fall, so erfolgt zunächst eine Leistungsvorgabe von P=100%.

Liegt die Spannung unterhalb des ersten Grenzwertes 32a und oberhalb eines zweiten Grenzwertes 32b, der beispielsweise 85% des Bezugswerts 30 betragen kann, erfolgt eine Leistungsreduktion entsprechend der Rampenfunktion im Absenkungsbereich 28b. Hierbei wird die Rampe im Absenkungsbereich 28b vorzugsweise in 10% Schritten von P=100% durchlaufen.

Während einer aktiven Zuordnung zwischen einer Phase U₁, U₂, U₃ und einem teilnehmerseitigen Anschluss 12 erfolgt in Intervallen eine Spannungsmessung und gegebenenfalls eine Anpassung der Leistungsvorgabe. Die Anpassung der Leistungsvorgabe kann jedoch dabei ebenfalls lediglich in Schritten erfolgen. Die Schritte sind vorzugsweise 10% von P=100%. Hierdurch wird erreicht, dass keine sprunghafte Leistungsveränderung erfolgt.

Es sei angemerkt, dass eine Reduktion der Leistung entsprechend der Rampe im Absenkungsbereich 28b bereits im Zeitpunkt des Zuschaltens wirksam sein kann.

Zunächst wird der Arbeitspunkt entlang der Kennlinie über die gemessene Spannung an dem Hausanschlusspunkt 6 bestimmt. Darüber hinaus kann jedoch eine Anpassung des Arbeitspunktes in zweierlei Hinsicht erfolgen. Zunächst kann beispielsweise eine Lastkorrektur abhängig von einer Netzlast erfolgen. Hierbei kann beispielsweise der Arbeitspunkt abhängig von einer Abweichung des Spannungsmomentanwertes von einem Spannungsmittelwert, der beispielsweise über die Zeit gemittelt wurde, durchgeführt werden. Ist beispielsweise der Spannungsmittelwert dauerhaft unterhalb des Bezugswerts 30, so kann der Arbeitspunkt Richtung unterem Grenzwert 32b verschoben werden oder es kann eine Verschiebung der Kennlinie 28 in Richtung höherer Spannungen im Zuge einer Parallelverschiebung erfolgen.

Neben einer netzlastabhängigen Lastkorrektur ist auch eine Korrektur des Arbeitspunktes abhängig von einer Netzimpedanz möglich. So kann am Hausanschlusspunkt 6 eine Netzimpedanz bestimmt werden. Hierdurch kann bestimmt werden, wie weit der Hausanschlusspunkt 6 von einem Ortsnetztransformator entfernt ist. Je weiter der Hausanschlusspunkt 6 von dem Ortsnetztransformator entfernt ist, desto größer kann die Netzimpedanz sein. In diesem Fall kann der Arbeitspunkt ebenfalls in Richtung des unteren Grenzwerts 32b verschoben werden oder es kann eine Parallelverschiebung der Kennlinie 28 in Richtung höherer Spannungen (im gezeigten Beispiel nach rechts) erfolgen. Dies beides führt dazu, dass bereits bei höheren Spannungen eine Leistungsreduktion einsetzt. Sowohl die netzlastabhängige Lastkorrektur als auch die Netzimpedanz abhängige Korrektur kann zusammen mit der Bestimmung der Leistungsvorgabe erfolgen.

Neben der Bestimmung der Leistungsvorgabe abhängig von dem Zuständen am Hausanschlusspunkt 6, welche zuvor beschrieben wurden, kann zusätzlich eine Skalierung der Kennlinie 28 durch einen Energieversorger oder einen Versorgungsnetzbetreiber erfolgen. Hierzu kann in dem Steuergerät 10 ein Steuersignal empfangen werden, mit dessen Hilfe die Kennlinie 28 in Richtung höherer Leistungen oder in Richtung kleinerer Leistungen skaliert werden kann. Insbesondere kann eine solche Skalierung in Richtung kleinerer Leistungen durch eine Multiplikation der bestimmten Leistungsvorgabe mit einem Faktor zwischen 0 und 1 erfolgen.

Der Energieversorger kann durch ein Steuersignal, welches ein Faktor von 0 beinhaltet, sowohl einen Bezug als auch die Rückspeisung von elektrischer Leistung unmittelbar beenden.

Nach einer Netzunterbrechung oder einem Beenden eines Bezugs durch ein entsprechendes Steuersignal mit dem Faktor 0 kann nach Wiederaufnahme des Netzes oder einem Steuersignal mit einem Faktor > 0 ein erneuter Bezug beginnen. Dieser erneute Bezug sollte jedoch innerhalb eines Zeitintervalls beginnen, wobei der Zeitpunkt der Wiederaufnahme des Bezugs innerhalb dieses Zeitintervalls zufällig gewählt werden sollte.

Darüber hinaus sollte beim Wiederaufnehmen der Leistung diese zunächst in Schritten ausgehend vom Nullwert erhöht werden. Insbesondere ist eine schrittweise Erhöhung in Schritten von 10% des Maximums P=100% bis zum Wert der Leistungsvorgabe sinnvoll. Für jede Phase kann die Maximalleistung beispielsweise 3,7 kVA sein.

Fig. 3b zeigt eine Kennlinie 34 für ein Rückspeisen aus dem Teilnehmer 22. Auch im Falle des Rückspeisens erfolgt zunächst eine Phasenauswahl wie zuvor beschrieben und eine Leistungsvorgabe abhängig von der gemessenen Spannung. Die Kennlinie 34 verfügt ebenfalls über ein konstantes Maximum 34a und einen Absenkungsbereich 34b. Der Absenkungsbereich 34b beginnt bei einem ersten Grenzwert 36a, der beispielsweise 110% des Bezugswertes 30 ist und endet bei einem oberen Grenzwert 36b, der beispielsweise 112% des Bezugswertes 30 ist. Beim Zuschalten, bzw. kurz vor dem Zuschalten erfolgt eine Spannungsmessung und der Arbeitspunkt auf der Kennlinie 34 wird bestimmt.

Abhängig von dem bestimmten Arbeitspunkt erfolgt eine Leistungsvorgabe, die von dem Steuergerät 10 an den Teilnehmer 22 signalisiert wird.

Eine Korrektur der Leistungsvorgabe kann wiederum entsprechend der Netzlast als auch der Netzimpedanz, wie zuvor beschrieben erfolgen, in dem der Arbeitspunkt verschoben wird. Neben der autarken Korrektur abhängig von Zuständen an dem Hausanschlusspunkt 6 kann ebenfalls eine Vorgabe durch einen Energieversorger oder einen Versorgungsnetzbetreiber durch ein entsprechendes Steuersignal erfolgen.

Überschreitet die Spannung den Grenzwert 36b, ist der Betrieb des Teilnehmers 22 nur im Lastmodus möglich und unterschreitet die Spannung den Grenzwert 32b, ist der Betrieb des Teilnehmers 22 nur im Rückspeisemodus möglich.

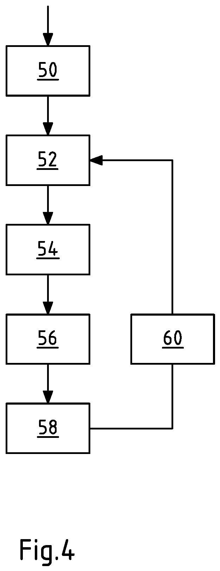

Fig. 4 zeigt ein Ablaufdiagramm eines Verfahrens gemäß einem Ausführungsbeispiel. In einem ersten Schritt 50 signalisiert das Elektrofahrzeug 22 gegenüber der Anschlussvorrichtung 2, dass es angeschlossen ist. Hierbei kann beispielsweise ein sogenanntes "plug present"-Signal ausgewertet werden. In diesem Zusammenhang kann der Teilnehmer 22 mitteilen, ob er einphasig, zweiphasig oder dreiphasig betrieben wird. Diese Information wird in dem Steuergerät 10 verarbeitet.

Anschließend kann in Schritt 52 ein Steuersignal des Energieversorgers oder des Versorgungsnetzbetreibers abgefragt oder ausgewertet werden, um nachfolgend eine beschrieben Skalierung der Leistungsvorgabe durchführen zu können. Ist der Wert P>0, so kann dies als Freigabe für das Laden durch den Energieversorger, den Netzbetreiber, den Messstellenbetreiber oder den Ladestationsbetreiber gewertet werden. In diesem Fall wird zu einem zufälligen Zeitpunkt innerhalb eines Zeitfensters, welches beispielsweise zwei Minuten sein kann, eine Zuordnung der Phasen wie im Zusammenhang mit der Fig. 1 und 2 beschrieben durchgeführt (54). Hierbei kann jedoch zunächst nur bestimmt werden, welche der Schalter 14, 16, 18 geschlossen werden sollen.

Bevor die Schalter geschlossen werden, kann in Schritt 56 eine Messung am Hausanschlusspunkt 6 abgefragt werden und ein aktueller Spannungswert und ein aktueller Netzimpedanzwert bestimmt werden. Dies kann für die Phasen erfolgen, die ausgewählt wurden, um auf die teilnehmerseitigen Anschlüsse geschaltet zu werden. Entsprechend der Messwerte erfolgt eine Bestimmung des Arbeitspunktes auf der Kennlinie 28, 34 entsprechend der Beschreibung zu den Fig. 3a und 3b und gegebenenfalls eine Korrektur des Arbeitspunktes, wie ebenfalls zu vor beschrieben wurde. Diese Leistungsvorgabe entsprechend des Arbeitspunktes auf den Kennlinien 28, 34 wird von dem Steuergerät 10 an das Elektrofahrzeug 22 kommuniziert und die entsprechenden Schalter werden geschlossen (58). Außerdem kann eine Skalierung anhand einer EVU Vorgabe überlagert erfolgen, wie beschrieben.

Während der Verbindung zwischen dem Elektrofahrzeug 22 und dem Hausanschluss 6 respektive dem Leistungsschutzschalter 4 erfolgt in Intervallen stets eine Messung der Messwerte und eine Abfrage des Steuersignals, um während der Verbindung den Arbeitspunkt auf den Kennlinien 28 bzw. 34 zu bestimmen und gegebenenfalls eine Anpassung der Skalierung der Leistungsvorgabe durchzuführen.

Wird in Schritt 58 bei ein- oder zweiphasigen Teilnehmern festgestellt, dass die Leistungsvorgabe P=0 ist, so wird dies gegenüber dem Elektrofahrzeug 22 kommuniziert und durchgesetzt.

Anschließend wird in Schritt 60 nach einer definierten Zeit überprüft, ob auf einer anderen Phase geladen werden kann. Hierfür wird überprüft, ob dies auf einer der anderen Phasen bei denen die Leistungsvorgabe P>0 ist, möglich ist. Ist dies der Fall, so wird in den Schritt 52 zurückverwiesen und die Leistungsvorgabe neu bestimmt.

Hierbei wird jedoch zu beachten sein, dass ein Ladevorgang auf einer neu gewählten Phase mit einer reduzierten Leistung, unterhalb der Leistungsvorgabe beginnen soll. Dies kann beispielsweise mit einem unteren Grenzwert von 10% der Maximalleistung sein und schrittweise in beispielsweise 10% Schritten der Maximalleistung bis zur Leistungsvorgabe erfolgen.

Wird in Schritt 60 festgestellt, dass auf keine der Phasen eine Leistungsvorgabe mit P>0 möglich ist, wird nicht umgeschaltet, sondern es wird abgewartet, bis eine Leistungsvorgabe mit P>0 auf der bisherigen Phase möglich ist. Der Vorgang kann beendet werden, wenn der Teilnehmer 22 ein Trennen signalisiert.

Mit dem gezeigten Verfahren ist es möglich, eine autonome Phasenumschaltung mit gleichzeitiger Berücksichtigung von Netzvorgaben zu realisieren. Vorteilhaft ist hierbei, dass auch ohne Verbindung zu einer Zentrale eine autonome netzdienliche Steuerung von Teilnehmern möglich ist, mit der eine passive Netzstabilisierung quasi als Rückfallebene bei Ausfall der zentralen Steuerung erreicht werden kann.

### Bezugszeichenliste

- 2: Abschlussvorrichtung
- 4: Schutzschalter
- 6: Hausanschlusspunkt / Zählerplatz
- 8: Versorgungsnetz
- 10: Steuergerät
- 12: Teilnehmerseitige Anschlüsse
- 14, 16, 18: Schalter
- 20: Neutralleiterschalter
- 22: Elektrofahrzeug
- 24: Bezug
- 26: Rückspeisung
- 28: Kennlinie
- 30: Bezugswert
- 32a, b: Grenzwert
- 34: Kennlinien
- 36a, b: Grenzwert

## Patentansprüche

1. Verfahren zum Betreiben eines an zumindest einer Phase eines elektrischen Versorgungsnetzes (8) betreibbaren Teilnehmers, umfassend:
- Messen eines Messwertes von zumindest einer elektrischen Größe an zumindest zwei versorgungsnetzseitigen Anschlüssen einer zumindest zwei teilnehmerseitige Anschlüsse (12) aufweisenden Anschlussvorrichtung, wobei die versorgungsnetzseitigen Anschlüsse verschiedenen Phasen des Versorgungsnetzes (8) zugeordnet sind,
- Zuordnen von zumindest einem versorgungsnetzseitigen Anschluss zu zumindest einem teilnehmerseitigen Anschluss (12) abhängig von dem Messwert, wobei durch die Zuordnung der jeweilige versorgungsnetzseitige Anschluss mit dem jeweiligen teilnehmerseitigen Anschluss (12) verbunden wird,
- wobei bei der Zuordnung eine elektrische Leistungsvorgabe abhängig von zumindest dem Messwert für zumindest einen der teilnehmerseitigen Anschlüsse (12) erfolgt,
**dadurch gekennzeichnet,**
- **dass** die elektrische Größe eine elektrische Netzimpedanz am versorgungsnetzseitigen Anschluss ist und die Messung frei von dem Teilnehmer erfolgt.

2. Verfahren nach Anspruch 1,
**dadurch gekennzeichnet,**
- **dass** der Messwert vor und/oder während der Dauer der Zuordnung gemessen wird und/oder dass die Leistungsvorgabe vor und/oder während der Dauer der Zuordnung erfolgt, insbesondere dass die Leistungsvorgabe in zeitlichen Abständen erfolgt.

3. Verfahren nach Anspruch 1 oder 2,
**dadurch gekennzeichnet,**
- **dass** der zumindest eine versorgungsnetzseitige Anschluss zu zumindest einem teilnehmerseitigen Anschluss (12) abhängig von einer Abweichung des Messwertes zu einem Bezugswert (30) oder abhängig von dem Betrag des Messwertes zugeordnet wird, insbesondere dass der versorgungsnetzseitige Anschluss zu einem teilnehmerseitigen Anschluss (12) zugeordnet wird, dessen Messwert von den Messwerten der noch nicht zugeordneten versorgungsnetzseitigen Anschlüssen der jeweils größte oder kleinste ist.

4. Verfahren nach einem der vorangehenden Ansprüche,
**dadurch gekennzeichnet,**
- **dass** die Zuordnung über eine Schaltmatrix erfolgt, wobei die Schaltmatrix zwischen einem ersten teilnehmerseitigen Anschluss (12) und den zumindest drei versorgungsnetzseitigen Anschlüssen jeweils einen ersten Schalter (14, 16, 18) aufweist, zwischen einem zweiten teilnehmerseitigen Anschluss (12) und zwei der versorgungsnetzseitigen Anschlüsse jeweils einen zweiten Schalter (14, 16, 18) aufweist und zwischen einem dritten teilnehmerseitigen Anschluss (12) und einem einzigen der versorgungsnetzseitigen Anschlüssen einen dritten Schalter (14, 16, 18) aufweist.

5. Verfahren nach einem der vorangehenden Ansprüche,
**dadurch gekennzeichnet,**
**dass** die ersten, zweiten und dritten Schalter (14, 16, 18) gegenseitig derart verknüpft sind, dass ein versorgungsnetzseitigen Anschlüssen jeweils nur mit einem versorgungsnetzseitigen Anschluss verbindbar ist und/oder dass die ersten und zweiten Schalter (14, 16, 18) mit einem Neutralleiterschalter (20) verknüpft sind, so dass bei einem Schließen eines ersten und/oder eines zweiten Schalters (14, 16, 18) der Neutralleiterschalter (20) geschlossen wird.

6. Verfahren nach einem der vorangehenden Ansprüche,
**dadurch gekennzeichnet,**
**dass** von den ersten und zweiten jeweils nur ein Schalter (14, 16, 18) geschlossen wird, und/oder
**dass** bei einer einphasigen Zuordnung die zweiten und dritten Schalter (14, 16, 18) geöffnet bleiben und bei einer zweiphasigen Zuordnung der dritte Schalter (14, 16, 18) geöffnet bleibt.

7. Verfahren nach einem der vorangehenden Ansprüche,
**dadurch gekennzeichnet,**
- **dass** der Bezugswert (30) für jede Phase bestimmt wird, insbesondere dass der Bezugswert (30) abhängig von historischen Messwerten der Phase bestimmt wird, insbesondere dass ein Mittelwert der elektrischen Größe der Phase bestimmt wird und dass der Bezugswert (30) abhängig von dem Mittelwert bestimmt wird.

8. Verfahren nach einem der vorangehenden Ansprüche,
**dadurch gekennzeichnet,**
- **dass** ein Arbeitspunkt einer Kennlinie (28) für die Zuordnung der Leistungsvorgabe zumindest abhängig von dem Messwert bestimmt wird.

9. Verfahren nach einem der vorangehenden Ansprüche,
**dadurch gekennzeichnet,**
- **dass** die Kennlinie (28) abhängig von einem externen Steuersignal, insbesondere von einem Steuersignal des Netzbetreibers skaliert wird.

10. Verfahren nach einem der vorangehenden Ansprüche,
**dadurch gekennzeichnet,**
- **dass** die Kennlinie (28) ein konstantes Maximum aufweist und dass die Kennlinie (28) ausgehend von dem Maximum einen zu einem Nullpunkt verlaufenden Absenkungsbereich aufweist, wobei der Absenkungsbereich vorzugsweise rampenförmig ist, und/oder
- **dass** die Kennlinie (28) im Absenkungsbereich stufenförmig verläuft, wobei die Stufen vorzugsweise gleiche Schrittweiten und/oder gleiche Stufenhöhen aufweisen, wobei die Stufenhöhe vorzugsweise 5-15% des Maximums, insbesondere 10% des Maximums beträgt.

11. Verfahren nach einem der vorangehenden Ansprüche,
**dadurch gekennzeichnet,**
- **dass** der Absenkungsbereich vorzugsweise bei 90-98% des Bezugswertes (30) beginnt und/oder dass der Nullpunkt des Absenkungsbereichs bei 85-93% des Bezugswertes (30) liegt oder dass der Absenkungsbereich vorzugsweise bei 102-110% des Bezugswertes (30) beginnt und/oder dass der Nullpunkt des Absenkungsbereichs bei 104-112% des Bezugswertes (30) liegt.

12. Verfahren nach einem der vorangehenden Ansprüche,
**dadurch gekennzeichnet,**
- **dass** wenn der Arbeitspunkt den Nullpunkt erreicht, eine neue Zuordnung erst nach einer Wartezeit erfolgt, insbesondere
- **dass** bei einer neuen Zuordnung die Kennlinie (28) vom Nullpunkt ausgehend vorzugsweise bis zum Maximum durchlaufen wird.

13. Verfahren nach einem der vorangehenden Ansprüche,
**dadurch gekennzeichnet,**
- **dass** bei einer Zuordnung der jeweilige versorgungsnetzseitige Anschluss mit dem jeweiligen teilnehmerseitigen Anschluss (12) nach einer zufällig bestimmten Zeit innerhalb eines Schaltintervalls verbunden wird.

14. Elektrische Anschlussvorrichtung für zumindest zweiphasige Teilnehmer an einem Energieversorgungsnetz (8) mit
- einer Anschlussvorrichtung mit versorgungsnetzseitigen Anschlüssen an verschiedenen Phasen des Versorgungsnetzes (8) und teilnehmerseitigen Anschlüssen (12),
- einer Messvorrichtung eingerichtet zum Messen eines Messwertes von zumindest einer elektrischen Größe an zumindest zwei versorgungsnetzseitigen Anschlüssen frei von dem Teilnehmer, wobei die elektrische Größe eine elektrische Netzimpedanz am versorgungsnetzseitigen Anschluss ist,
- wobei die Anschlussvorrichtung zum Zuordnen von zumindest einem versorgungsnetzseitigen Anschluss zu zumindest einem teilnehmerseitigen Anschluss (12) abhängig von dem Messwert eingerichtet ist, wobei durch die Zuordnung der jeweilige versorgungsnetzseitige Anschluss mit dem jeweiligen teilnehmerseitigen Anschluss (12) verbunden ist,
**dadurch gekennzeichnet,**
- **dass** bei der Zuordnung eine elektrische Leistungsvorgabe abhängig von zumindest dem Messwert für zumindest einen der teilnehmerseitigen Anschlüsse (12) erfolgt.

## Claims

1. Method for operating a subscriber which can be operated on at least one phase of an electrical supply network (8), comprising:
- Measurement of a measured value of at least one electrical quantity at at least two supply network-side connections of a connecting device having at least two subscriber-side connections (12), the supply network-side connections being allocated to different phases of the supply network (8),
- Allocating of at least one supply network-side connection to at least one subscriber-side connection (12) as a function of the measured value, the allocation causes connecting the respective supply network-side connection to the respective subscriber-side connection (12),
- wherein during the allocation, an electrical power specification is made as a function of at least the measured value for at least one of the subscriber-side connections (12),
**characterized in that**,
- the electrical value is an electrical mains impedance at the network-side connection and the measurement takes place without the subscriber being connected.

2. Method according to claim 1,
**characterized in that**
- the measured value is measured before and/or during the duration of the allocation and/or **in that** the power specification takes place before and/or during the duration of the allocation, in particular **in that** the power specification takes place at time intervals.

3. Method according to claim 1 or 2,
**characterized in that**
- the at least one supply network-side connection is allocated to at least one subscriber-side connection (12) as a function of a deviation of the measured value from a reference value (30) or as a function of the absolute value of the measured value, in particular **in that** the supply network-side connection is allocated to a subscriber-side connection (12) whose measured value is the largest or smallest of the measured values of the supply network-side connections, respectively, which have not yet been allocated.

4. Method according to one of the preceding claims,
**characterized in that**
- the allocation takes place via a switching matrix, the switching matrix having a first switch (14, 16, 18) between a first subscriber-side connection (12) and the at least three supply network-side connections, respectively, having a second switch between a second subscriber-side connection and two of the supply network-side connections, respectively, and having a third switch (14, 16, 18) between a third subscriber-side connection and a single one of the supply network-side connections.

5. Method according to one of the preceding claims,
**characterized in that**
the first, second and third switches (14, 16, 18) are linked to one another in such a way that a supply network-side connection can only be connected to a supply network-side connection respectively and/or **in that** the first and second switches (14, 16, 18) are linked to a neutral conductor switch (20), so that the neutral conductor switch (20) is closed when a first and/or a second switch (14, 16, 18) is closed.

6. Method according to one of the preceding claims,
**characterized in that**
only one switch of each of the first and second switches (14, 16, 18) is closed and/or
in the case of a single-phase allocation, the second and third switches (14, 16, 18) remain open and, in the case of a two-phase allocation, the third switch (14, 16, 18) remains open.

7. Method according to one of the preceding claims,
**characterized in that**
- the reference value (30) is determined for each phase, in particular **in that** the reference value (30) is determined as a function of historical measured values of the phase, in particular **in that** an average value of the electrical quantity of the phase is determined, and **in that** the reference value (30) is determined as a function of the average value.

8. Method according to one of the preceding claims,
**characterized in that**
- an operating point of a characteristic curve (28) for the allocation of the power specification is determined at least as a function of the measured value.

9. Method according to one of the preceding claims,
**characterized in that**
- the characteristic curve (28) is scaled as a function of an external control signal, in particular of a control signal from the network operator.

10. Method according to one of the preceding claims,
**characterized in that**
- the characteristic curve (28) has a constant maximum and **in that** the characteristic curve (28), starting from the maximum, has a reduction range running to a zero point, the reduction range preferably being ramp-shaped and/or
- the characteristic curve (28) in the reduction range is step-shaped, the steps preferably having identical step widths and/or identical step heights, the step height preferably being 5-15% of the maximum, in particular 10% of the maximum.

11. Method according to one of the preceding claims,
**characterized in that**
- the reduction range preferably starts at 90-98% of the reference value (30) and/or **in that** the zero point of the reduction range is at 85-93% of the reference value (30) or **in that** the reduction range preferably starts at 102-110% of the reference value (30) and/or **in that** the zero point of the reduction range is at 104-112% of the reference value (30).

12. Method according to one of the preceding claims,
**characterized in that**
- if the operating point reaches the zero point, a new allocation only takes place after a waiting time in particular
- in the case of a new allocation, the characteristic curve (28) is preferably run through from the zero point to the maximum.

13. Method according to one of the preceding claims,
**characterized in that**
- in the case of an allocation, the respective connection on the supply network side is connected to the respective connection (12) on the subscriber side after a randomly determined time within a switching interval.

14. Electrical connection device for at least two-phase subscribers of a power supply network (8) with
- a connection device with supply network-side connections at various phases of the supply network (8) and subscriber-side connections (12),
- of a measuring device arranged for measuring a measured value of at least one electrical quantity at at least two supply network-side connections without the subscriber being connected, wherein the electrical value is an electrical mains impedance at the network-side connection,
- wherein the connecting device is arranged for allocating at least one supply network-side connection to at least one subscriber-side connection (12) as a function of the measured value, the respective supply network-side connection being connected to the respective subscriber-side connection (12) by the allocation,
**characterized in that**
- during the allocation, an electrical power specification is made as a function of at least the measured value for at least one of the subscriber-side connections (12).

## Revendications

1. Procédé pour exploiter un abonné expoitable sur au moins une phase d'un réseau d'alimentation en énergie électrique (8), comprenant:
- mesurer une valeur de mesure d'au moins une grandeur électrique sur au moins deux raccordements côté réseau d'alimentation d'un dispositif de raccordement ont au moins deux raccordements côté abonné (12), où les raccordements côté réseau d'alimentation sont associés à des différentes phases du réseau d'alimentation (8),
- associer au moins un raccordement côté réseau d'alimentation à au moins un raccordement côté abonné (12) en fonction de la valeur de mesure, où le raccordement respectif côté réseau d'alimentation est associé au raccordement respectif côté abonné (12) par l'association,
- où une consigne de puissance électrique se fait lors de l'association en fonction d'au moins la valeur de mesure pour au moins l'un des raccordements côté abonné (12),
**caractérisé en ce que**
- la grandeur électrique est une impédance de réseau électrique au raccordement côté réseau d'alimentation et la mesure se fait sans l'abonné.

2. Procédé selon la revendication 1,
**caractérisé en ce que**
- la valeur de mesure est mesurée avant et/ou pendant la durée de l'association et/ou que la consigne de puissance se fait avant et/ou pendant la durée de l'attribution, en particulier que la consigne de puissance se fait à des intervalles de temps.

3. Procédé selon la revendication 1 ou 2,
**caractérisé en ce que**
- l'au moins un raccordement côté réseau d'alimentation est associé à au moins un raccordement côté abonné (12) en fonction d'un écart de la valeur mesurée par rapport à une valeur de référence (30) ou en fonction de la valeur absolue de la valeur mesurée, en particulier que le raccordement côté réseau d'alimentation est associé à un raccordement côté abonné (12) dont la valeur mesurée est, parmi les valeurs mesurées des raccordements côté réseau d'alimentation non encore attribués, respectivement la plus grande ou la plus petite.

4. Procédé selon l'une des revendications précédentes,
**caractérisé en ce que**
- l'association se fait par l'intermédiaire d'une matrice de commutation, où la matrice de commutation a un premier commutateur (14, 16, 18) entre un premier raccordement (12) côté abonné et les au moins trois raccordements côté réseau d'alimentation, un deuxième commutateur (14, 16, 18) entre un deuxième raccordement (12) côté abonné et deux des raccordements côté réseau d'alimentation et un troisième commutateur (14, 16, 18) entre un troisième raccordement (12) côté abonné et un seul des raccordements côté réseau d'alimentation.

5. Procédé selon l'une des revendications précédentes,
**caractérisé en ce que**
les premier, deuxième et troisième commutateurs (14, 16, 18) sont mutuellement associés de telle sorte qu'un raccordement côté réseau d'alimentation sont seulement reliable , respectivement, à un raccordement côté réseau d'alimentation et/ou que les premier et deuxième commutateurs (14, 16, 18) sont associés à un commutateur de conducteur neutre (20) de telle sorte que, lors de la fermeture d'un premier et/ou d'un deuxième commutateur (14, 16, 18), le commutateur de conducteur neutre (20) est fermé.

6. Procédé selon l'une des revendications précédentes,
**caractérisé en ce que**
parmi les premier et deuxième commutateurs, un seul (14, 16, 18) est respectivement fermé, et/ou
que, lors d'une association monophasée, les deuxième et troisième commutateurs (14, 16, 18) restent ouverts et, lors d'une association biphasée, le troisième commutateur (14, 16, 18) reste ouvert.

7. Procédé selon l'une des revendications précédentes,
**caractérisé en ce que**
- la valeur de référence (30) est déterminée pour chaque phase, en particulier que la valeur de référence (30) est déterminée en fonction de valeurs de mesure historiques de la phase, en particulier qu'une valeur moyenne de la grandeur électrique de la phase est déterminée et que la valeur de référence (30) est déterminée en fonction de la valeur moyenne.

8. Procédé selon l'une des revendications précédentes,
**caractérisé en ce que**
- un point de fonctionnement d'une courbe caractéristique (28) pour l'association de la consigne de puissance est déterminé au moins en fonction de la valeur mesurée.

9. Procédé selon l'une des revendications précédentes,
**caractérisé en ce que**
- la courbe caractéristique (28) est mise à l'échelle en fonction d'un signal de commande externe, en particulier d'un signal de commande de l'opérateur du réseau.

10. Procédé selon l'une des revendications précédentes,
**caractérisé en ce que**
- la courbe caractéristique (28) a un maximum constant et que la courbe caractéristique (28) a, à partir du maximum, une zone d'abaissement s'étendant vers un point zéro, où la zone d'abaissement est de préférence en forme de rampe, et/ou
- que la courbe caractéristique (28) s'étend de manière étagée dans la zone d'abaissement, où les gradins ont de préférence des largeurs de gradins identiques et/ou des hauteurs de gradins identiques, la hauteur de gradin représentant de préférence 5-15% du maximum, en particulier 10% du maximum.

11. Procédé selon l'une des revendications précédentes,
**caractérisé en ce que**
- la plage d'abaissement commence de préférence à 90-98% de la valeur de référence (30) et/ou que le point zéro de la plage d'abaissement se situe à 85-93% de la valeur de référence (30) ou que la plage d'abaissement commence de préférence à 102-110% de la valeur de référence (30) et/ou que le point zéro de la plage d'abaissement se situe à 104-112% de la valeur de référence (30).

12. Procédé selon l'une des revendications précédentes,
**caractérisé en ce que**
- lorsque le point de fonctionnement atteint le point zéro, une nouvelle association n'a lieu qu'après un temps d'attente, en particulier
- que lors d'une nouvelle association, la courbe caractéristique (28) est parcourue à partir du point zéro, de préférence jusqu'au maximum.

13. Procédé selon l'une des revendications précédentes,
**caractérisé en ce que**
- lors d'une association, le raccordement côté réseau d'alimentation respectif est relié au raccordement respectif côté abonné (12) après un temps déterminé de manière aléatoire dans un intervalle de commutation.

14. Dispositif de raccordement électrique pour des abonnés au moins biphasés à un réseau d'alimentation en énergie (8) avec
- un dispositif de raccordement avec des raccordements côté réseau d'alimentation sur différentes phases du réseau d'alimentation (8) et des raccordements côté abonné (12),
- un dispositif de mesure configuré pour mesurer une valeur de mesure d'au moins une grandeur électrique à au moins deux raccordements côté réseau d'alimentation sans l'abonné, où la grandeur électrique est une impédance de réseau électrique au raccordement côté réseau d'alimentation,
- où le dispositif de raccordement est configuré pour associer au moins un raccordement côté réseau d'alimentation à au moins un raccordement côté abonné (12) en fonction de la valeur de mesure, où le raccordement côté réseau d'alimentation respectif est relié au raccordement côté abonné (12) respectif par l'association,
**caractérisé en ce que**
- lors de l'association, une consigne de puissance électrique se fait en fonction d'au moins la valeur de mesure pour au moins l'un des raccordements côté abonné (12).
